# EUROPEAN PATENT APPLICATION

(11) **EP 2 317 011 A1**
(43) Date of publication of application: **04.05.2011**
(21) Application number: 09252495.8
(22) Date of filing: 28.10.2009
(51) Int. Cl.: E02B 3/06

(54) **Shore protection system**

(71) Applicant: Peng, Ta-Hsiung, Kaohsiung City (TW); Peng, Kuang-Chien, Kaohsiung City (TW); Peng, Kuang-Tsung, Kaohsiung City (TW)
(72) Inventor: Peng, Ta-Hsiung, Kaohsiung City (TW); Peng, Kuang-Chien, Kaohsiung City (TW); Peng, Kuang-Tsung, Kaohsiung City (TW)
(74) Representative: Pratt, David Martin

(57) **Abstract**

A wave energy-dissipating member (200) of a shore protection system includes a net supporting framework (210) and a net component (220). The net component (220) includes a net body (221) formed fromintersecting string lines and secured to inclined net support structures (214) of frame members (211) of the net supporting framework (210). Each of a plurality of leaf units (222) has a base part (2221) that is connected to a string line of the net body (221), and a fringed part (2222) that extends from the base part (2221) and that is capable of dissipating wave energy.

## Description

The present invention relates to a protection system, more particularly to a shore protection system for preventing shore erosion.

Conventional shore protection techniques involve deployment of structures such as jetties, seawalls, revetments, breakwaters, etc. These structures disturb waves and dissipate energy thereof, thereby preventing sand from drifting offshore, and thus preventing shore erosion. Conventional hard shore protection structures are disadvantageous in that they lack flexibility to mimic natural processes and are likely to be damaged in case of stormy weather.

Therefore, an object of the present invention is to provide a shore protection system that possesses flexibility to mimic natural processes, that is capable of dissipating wave energy, that permits sediment deposition, and that prevents shore erosion.

A shore protection system of the present invention includes a wave energy-dissipating member disposed to extend along a longitudinal direction. The wave energy-dissipating member includes a net supporting framework and a net component. The net supporting framework includes a plurality of frame members spaced apart from each other along the longitudinal direction. Each of the frame members includes a front stake, a rear stake disposed behind the front stake, and an inclined net support structure disposed between the front stake and the rear stake. The inclined net support structure includes a first spring component connected to the front stake, a bar component having a front end that is connected to the first spring component and a rear end that extends toward the rear stake, and a suspension unit disposed to connect the bar component to at least one of the front stake and the rear stake such that the bar component extends inclinedly between the front stake and the rear stake with the front end of the bar component disposed at a lower height than the rear end of the bar component. The net component includes a net body secured to the inclined net support structures of the frame members of the net supporting framework, and formed from intersecting string lines. The net component further includes a plurality of leaf units, each of which has a base part that is connected to one of the string lines of the net body, and a fringed part that extends from the base part and that is capable of dissipating wave energy.

Other features and advantages of the present invention will become apparent in the following detailed description of the preferred embodiments with reference to the accompanying drawings, of which:
Figure 1 is a schematic top view of the first preferred embodiment of a shore protection system according to the present invention, illustrating the shore protection system in relation to a shoreline;
Figure 2 is a schematic front view of Figure 1;
Figure 3 is a fragmentary enlarged view of Figure 1, illustrating an end member connected to a wave energy-dissipating member of the first preferred embodiment;
Figure 4 is a schematic front view of Figure 3;
Figure 5 is a schematic cross-sectional view taken along line V-V in Figure 3;
Figure 6 is a schematic fragmentary enlarged view illustrating a net component of the wave energy-dissipating member of the first preferred embodiment;
Figure 7 is a fragmentary exploded perspective view of the end member of the first preferred embodiment;
Figure 8 is a fragmentary partly exploded perspective view of the end member in Figure 7;
Figure 9 is another fragmentary partly exploded perspective view similar to Figure 8, illustrating two energy-dissipating tires of a covering unit of the end member;
Figure 10 is an assembled perspective view of the end member;
Figure 11 is a schematic fragmentary enlarged view illustrating a net component of a wave energy-dissipating member of the second preferred embodiment of a shore protection system according to the present invention; and
Figure 12 is a schematic cross-sectional view of a resilient tire member of the wave energy-dissipating member of the second preferred embodiment.

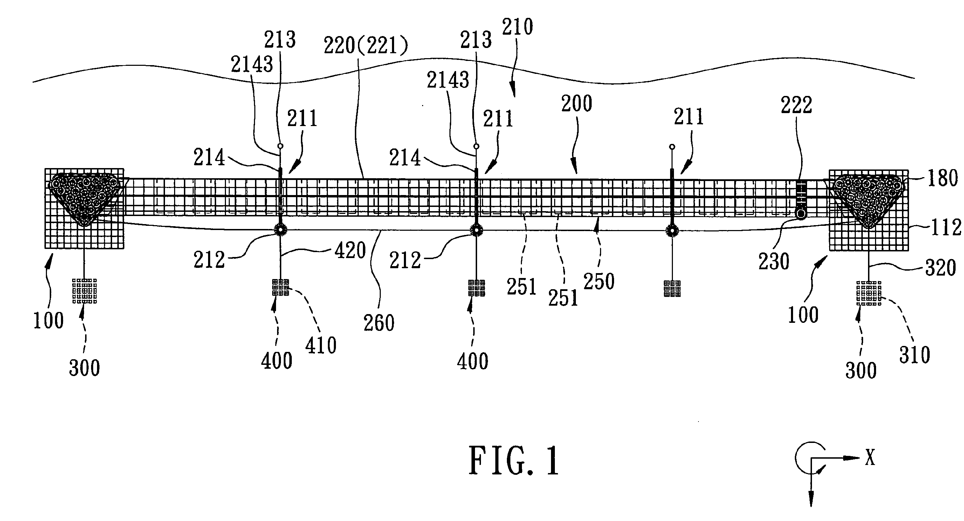

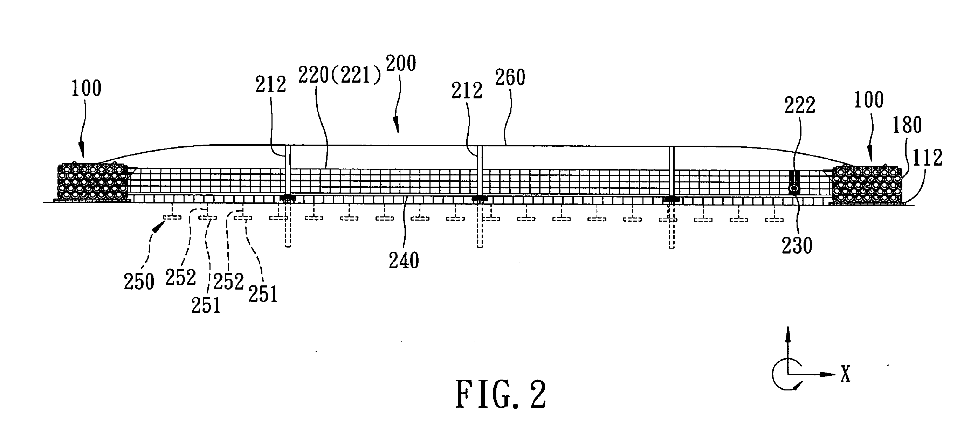

Referring to Figures 1 and 2, the first preferred embodiment of a shore protection system according to the present invention is adapted to be disposed on a shore and includes a wave energy-dissipating member 200 and a pair of end members 100. The wave energy-dissipating member 200 is disposed to extend along a longitudinal direction (X) of the shore, and includes a net supporting framework 210 and a net component 220.

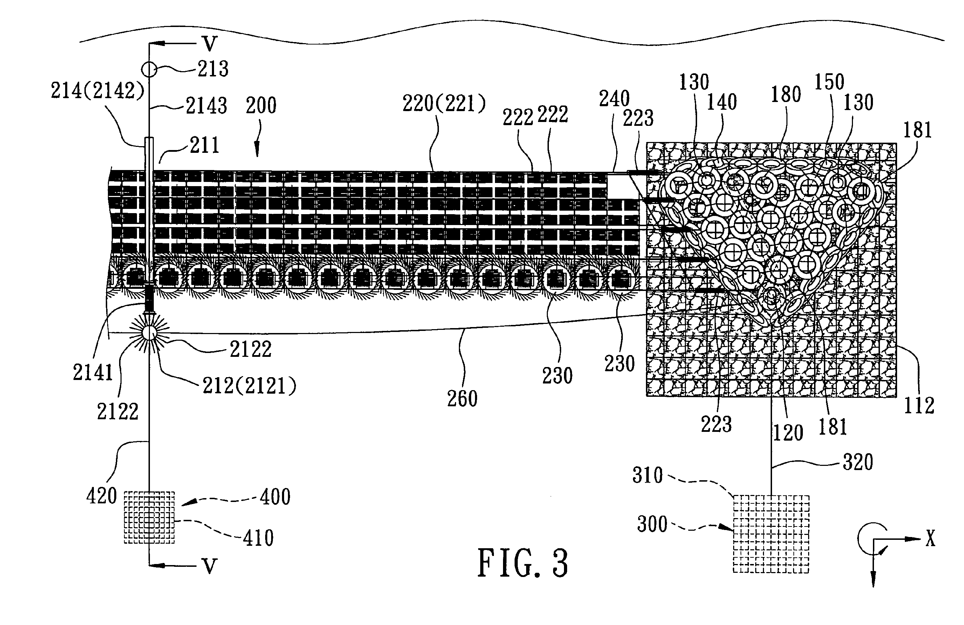

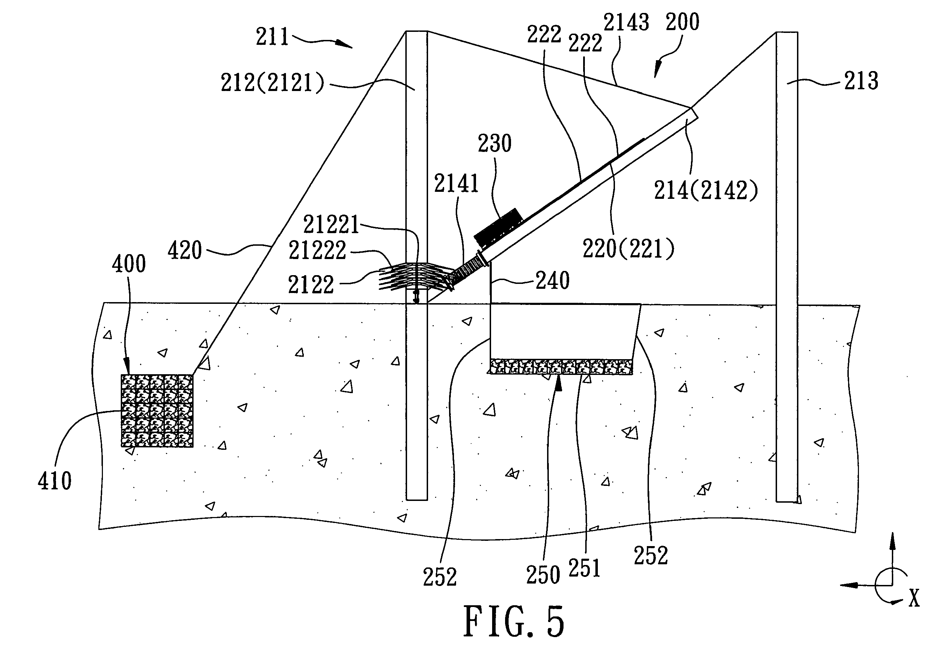

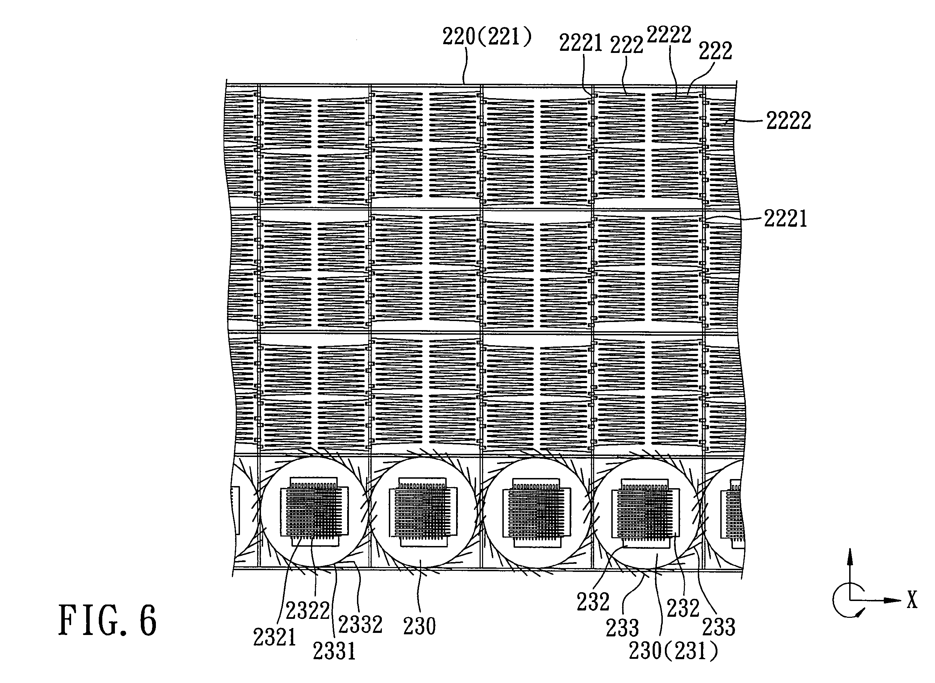

Referring further to Figures 3 to 6, the net supporting framework 210 includes a plurality of frame members 211 spaced apart from each other along the longitudinal direction (X). Each frame member 211 includes a front stake 212, a rear stake 213, and an inclined net support structure 214. The front stake 212 has a lower end driven into the shore. The rear stake 213 also has a lower end driven into the shore, and is disposed behind the front stake 212. The inclined net support structure 214 is disposed between the front stake 212 and the rear stake 213, and includes a first spring component 2141 that is connected to the front stake 212, a bar component 2142, and a suspension unit 2143. The bar component 2142 has a front end connected to the first spring component 2141, and a rear end extending toward the rear stake 213. The suspension unit 2143 is disposed to connect the bar component 2142 to the front stake 212 and the rear stake 213 such that the bar component 2142 extends inclinedly between the front stake 212 and the rear stake 213 with the front end of the bar component 2142 disposed at a lower height than the rear end of the bar component 2142.

The net component 220 includes a net body 221 and a plurality of leaf units 222. The net body 221 is secured to and spread apart by the bar components 2142 of the inclined net support structures 214 of the frame members 211 of the net supporting framework 210, and is formed from intersecting string lines. Each of the leaf units 222 has a base part 2221 connected to one of the string lines of the net body 221, and a fringed part 2222 extending from the base part 2221 and capable of dissipating wave energy.

The wave energy-dissipating member 200 further includes a plurality of resilient tire members 230 arranged in rows on the net body 221 (only a lowermost row of the resilient tire members 230 is shown in the drawings for the sake of clarity). Each of the resilient tire members 230 in the lowermost row includes a plurality of front flexible leaf units 232, a plurality of circumferential flexible leaf units 233, and a resilient tire body 231 (e.g., a used tire body) that has a front side opposite to the net body 221 and that has an outer circumferential face. Each of the front and circumferential flexible leaf units 232, 233 has a construction similar to that of the leaf units 222, and has a base part 2321, 2331 disposed on the front side or on the outer circumferential face of the resilient tire body 231, and a fringed part 2322, 2332 that extends from the base part 2321, 2331. The front and circumferential flexible leaf units 232,233 are capable of dissipating wave energy, and the resilient tire body 231 is capable of absorbing shock force.

The shore protection system of the first preferred embodiment further includes: a netlike fence 240 disposed on the shore, extending along the longitudinal direction (X) at an underside of the wave energy-dissipating member 200, and having a top end connected to the front ends of the bar components 2142; a plurality of underground cage components 250 disposed at an underside of the netlike fence 240 and buried in the ground, each of the underground cage components 250 including a cage body 251 and a connecting cable 252 that connects the cage body 251 to the netlike fence 240; and a plurality of underground cage members 400, each of which includes a cage body 410 that is disposed forwardly of the wave energy-dissipating member 200 and that is buried in the ground at a position corresponding to a respective one of the front stakes 212, and a steel cable 420 connecting the cage body 410 to the respective one of the front stakes 212.

In this embodiment, the front stake 212 includes a stake body 2121, and a flexible leaf unit 2122 having a base part 21221 that is disposed on the stake body 2121 adjacent to the first spring component 2141, and a fringed part 21222 that extends from the base part 21221 thereof. The flexible leaf unit 2122 is capable of disturbing wave currents, thus reducing wave energy and preventing sand from being washed away, thereby preventing shore erosion. It is to be noted that, in the present embodiment, the base part 21221 is secured to a steel wire that is wrapped around the stake body 2121.

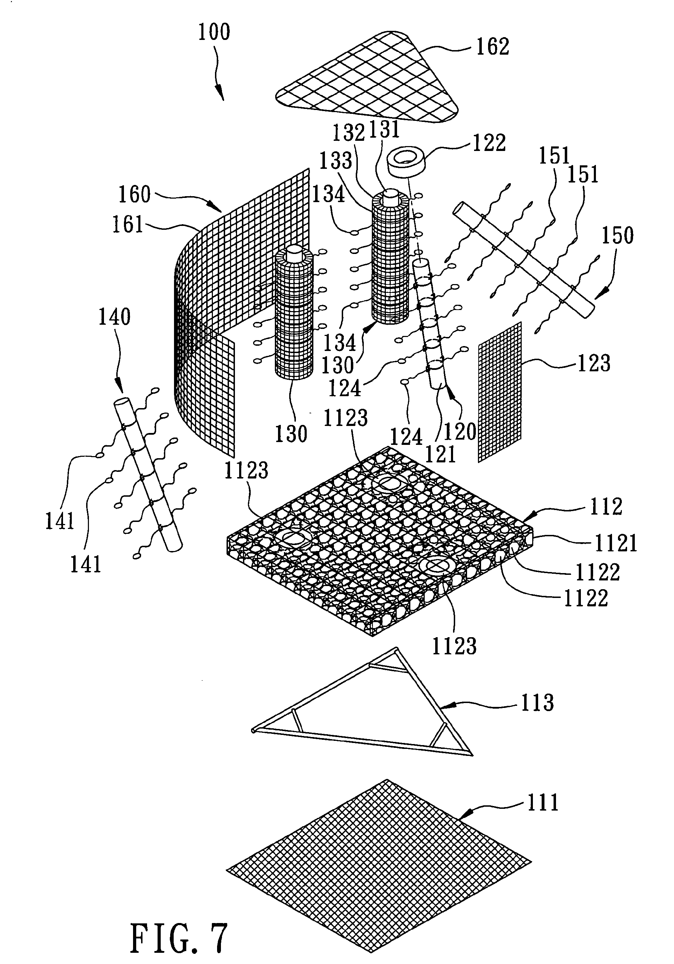

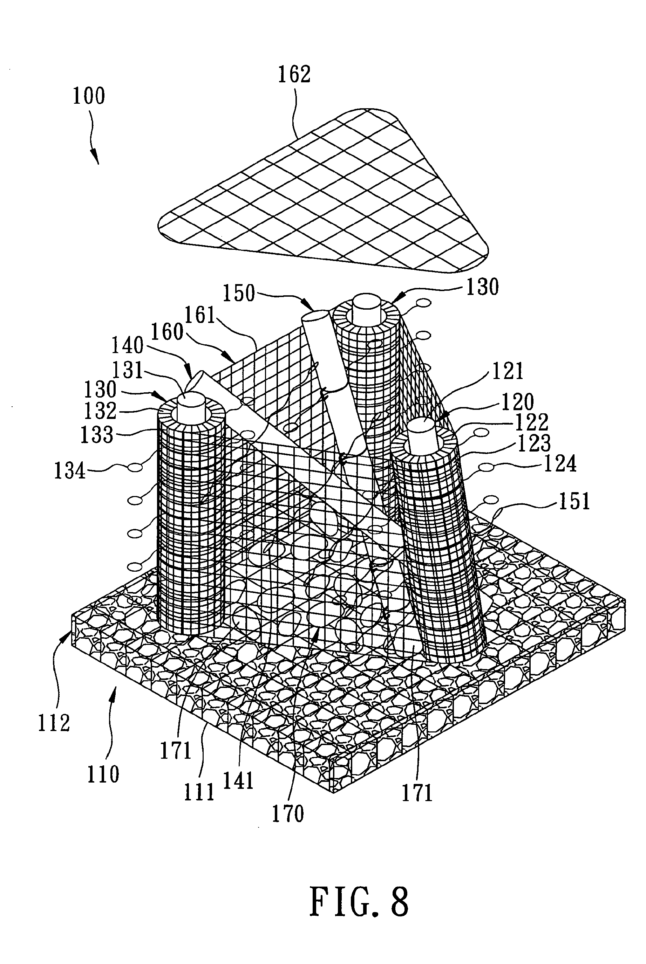

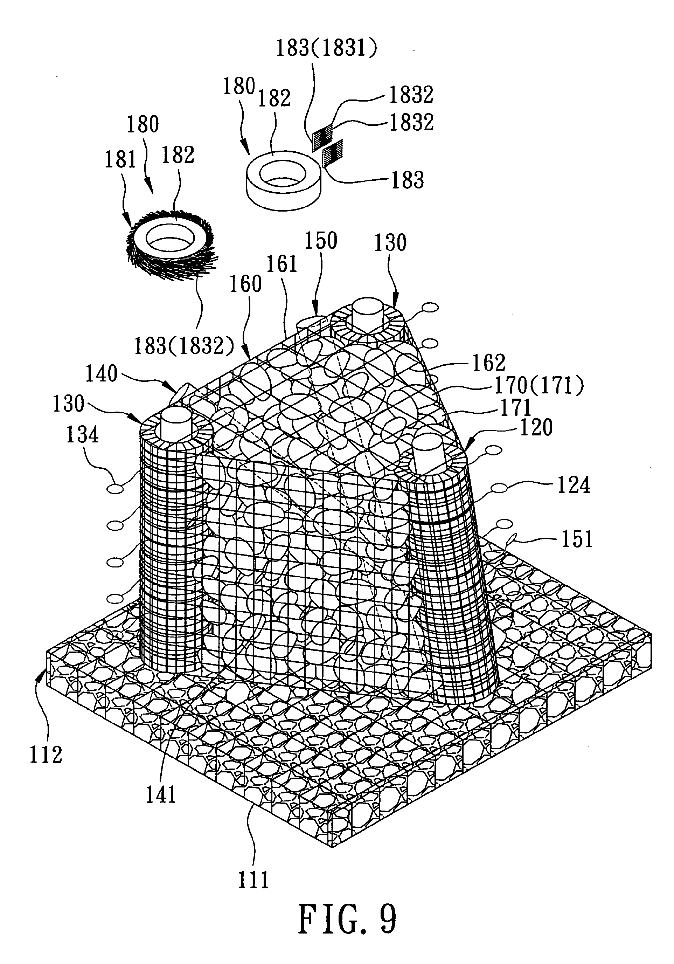

With further reference to Figures 7 to 9, the end members 100 are disposed at opposite longitudinal ends of the wave energy-dissipating member 200. Each of the end members 100 includes: a base unit 110 including a sinking-prevention screen 111 that is disposed on the shore, a rock cage component 112 that is disposed on the sinking-prevention screen 111, and a positioning frame 113 that is disposed between the sinking-prevention screen 111 and the rock cage component 112; a front shock absorbing component 120 and two rear shock absorbing components 130 that are disposed to extend upwardly from the base unit 110, each of which includes a post 121, 131 extending through the rock cage component 112 to connect to the positioning frame 113, a plurality of resilient tires 122, 132 (e.g., used tires) sleeved on the post 121, 131, and a netlike covering 123, 133 wrapped around the resilient tires 122, 132 on the post 121, 131; a netlike enclosure 160 including a surrounding enclosure part 161 that surrounds the front and rear shock absorbing components 120, 130, and a top enclosure part 162 that is disposed at an open top side of the surrounding enclosure part 161; a filler unit 170 that includes a plurality of rocks 171 for filling spaces among the front and rear shock absorbing components 120, 130 in the netlike enclosure 160 (shown in Figure 9); and two props 140, 150 that are disposed in the netlike enclosure 160, each of the props 140, 150 having a front end portion secured to the front shock absorbing component 120, and a rear end portion secured to a respective one of the rear shock absorbing components 130 in such a manner that the front end portion thereof is disposed at a lower height than the rear end portion thereof. The front and rear shock absorbing components 120, 130 of each of the end members 100 are arranged in a triangular formation in such a manner that the front absorbing component 120 inclines rearwardly toward the rear shock absorbing components 130. The rock cage component 112 of the base unit 110 includes a metal (steel) cage 1121, three positioning tires 1123 disposed inside the metal cage 1121 and disposed to permit the posts 121, 131 to extend therethrough, and a plurality of rocks 1122 for filling spaces among the positioning tires 1123 inside the metal cage 1121. It is to be noted that, in the present embodiment, the front and rear shock absorbing components 120, 130 are provided with tie members 124, 134 on the posts 121, 131 for connection to steel cables (not shown) that are connected to the positioning frame 113 so as to position the front and rear shock absorbing components 120, 130 on the base unit 110.

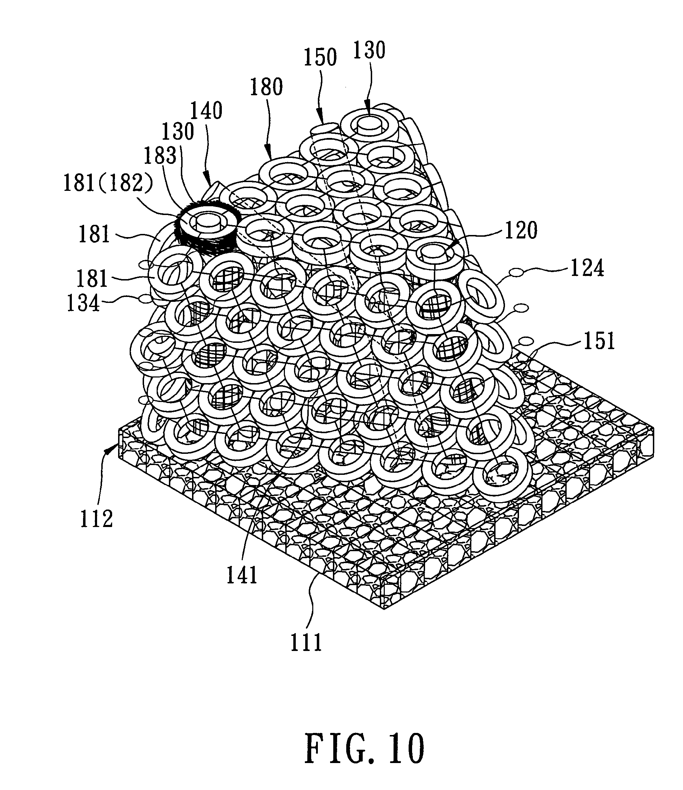

Referring further to Figures 9 and 10, each of the end members 100 is provided with a covering unit 180 including a plurality of energy-dissipating tires 181 that are tied to the netlike enclosure 160 and that cover an outer side thereof. Adjacent ones of the energy-dissipating tires 181 are tied together, and the energy-dissipating tires 181 covering the surrounding enclosure part 162 are partially overlaid by at least one of the adjacent energy-dissipating tires 181. Each of the energy-dissipating tires 181 includes a tire body 182 (e.g., a used tire body) that has an outer circumferential face, and a plurality of flexible leaf units 183 each having a construction similar to that of the leaf units 222 and having a base part 1831 disposed on the outer circumferential face of the tire body 182, and a fringed part 1832 extending from the base part 1831 thereof. Only one of the energy-dissipating tires 181 is shown with the flexible leaf units 183 in Figure 9 for the sake of simplicity.

It is to be noted that the flexible leaf units 183,2122, leaf units 222, and front and circumferential flexible leaf units 232,233 can be made of a polymeric material (e.g., rubber) or a metallic material (e.g., stainless steel).

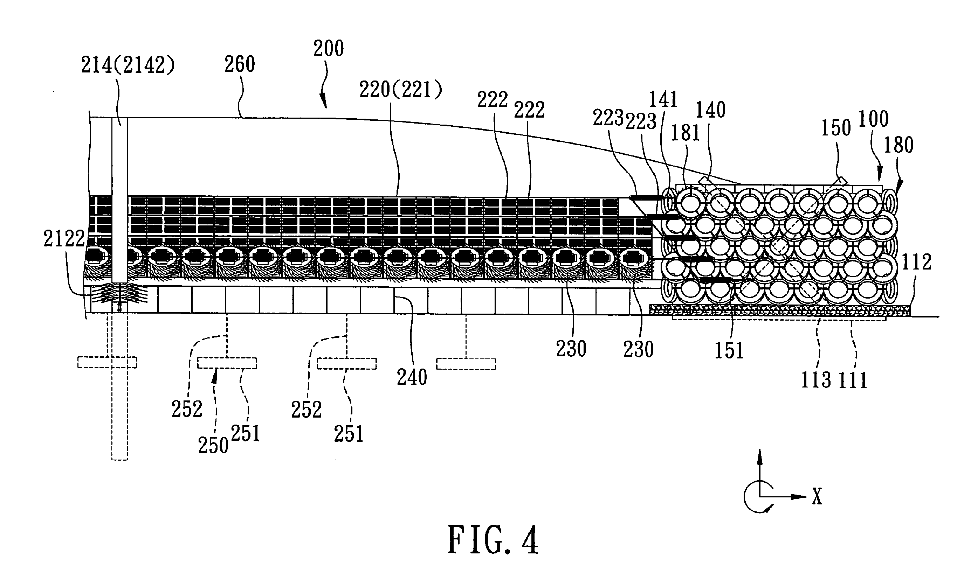

The net body 221 has opposite ends, each of which is connected to the props 140, 150 of an adjacent one of the end members 100. In this embodiment, the net component 220 further includes a plurality of second spring components 223 connected to the opposite ends of the net body 221 (see Figures 3 and 4). The second spring components 223 are connected to tie members 141, 151 on the props 140, 150 in such a manner that the end members 100 provide a positioning effect to the wave energy-dissipating member 200. Preferably, the netlike fence 240 further has opposite ends connected to the tie members 124, 134 on the posts 121, 131 of the front and rear shock absorbing components 120, 130 of an adjacent one of the end members 100.

Referring once again to Figures 1 and 3, the wave energy-dissipating member 200 further includes a cable member 260 (e.g., a steel cable) connecting top ends of the front stakes 212 of the frame members 211 and top ends of the posts 121 of the front shock absorbing components 120 so that the end members 100 can provide a better positioning effect for stabilizing the wave energy-dissipating member 200.

The shore protection system of the first preferred embodiment further comprises a pair of underground cage members 300, each of which includes a cage body 310 disposed forwardly of a respective one of the end members 100 and buried in the ground, and a cable 320 connecting the cage body 310 to the respective one of the end members 100.

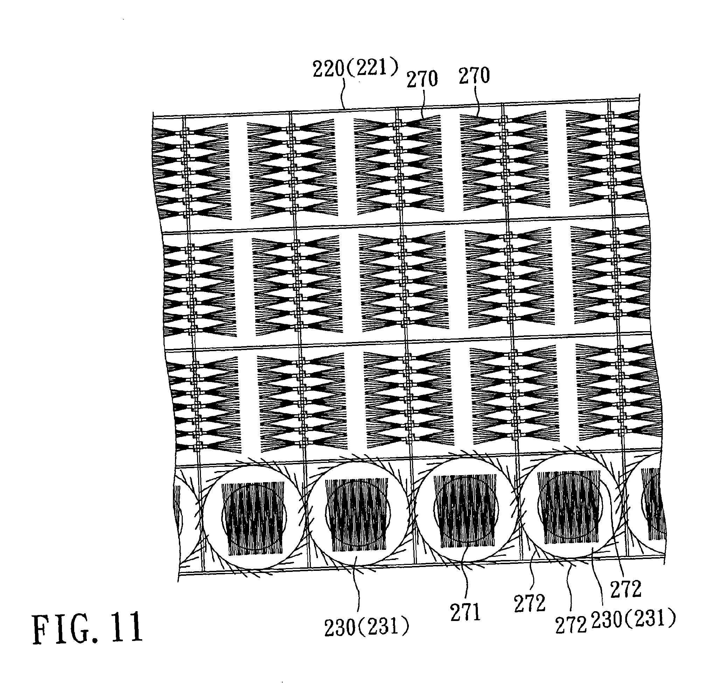

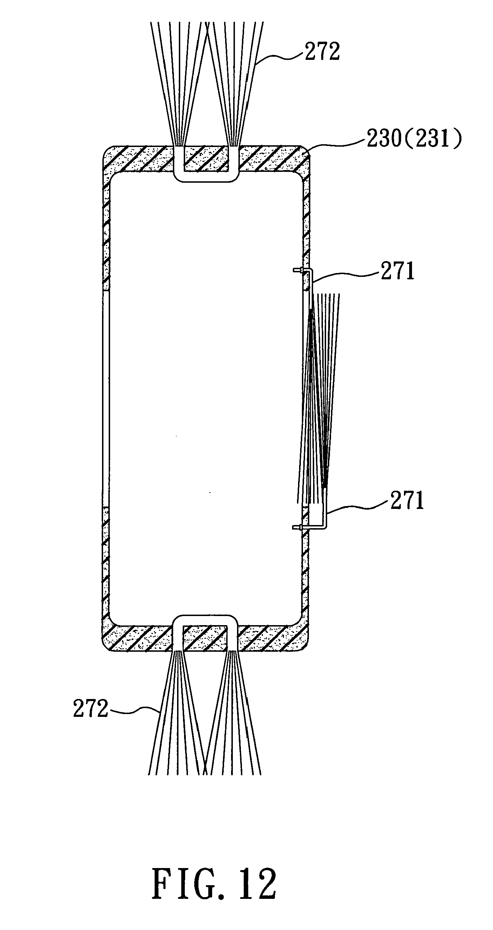

The second preferred embodiment of a shore protection system according to the present invention is substantially similar to the first preferred embodiment in construction. Referring to Figures 11 and 12, in the second preferred embodiment, the leaf units 222, 232, 233 of the first preferred embodiment are replaced by leaf units 270, 271, 272 in the form of short steel wire bundles, each having a base part and a fringed part extending from the base part.

In summary, the net body 221 of the net component 220 of the wave energy-dissipating member 200 has a structure capable of disturbing waves and dissipating energy thereof. Moreover, the resilient tire members 230 are capable of absorbing shock force and further reducing the wave energy. In addition, the first and second spring components 2141, 223 are capable of absorbing shock force so as to protect the wave energy-dissipating member 200. Furthermore, the net body 221 is disposed inclinedly to reduce resistance and protect the net body 221 from damage.

## Claims

1. A shore protection system including a wave energy-dissipating member (200) disposed to extend along a longitudinal direction, **characterized in that** said wave energy-dissipating member (200) includes:
a net supporting framework (210) that includes a plurality of frame members (211) spaced apart from each other along the longitudinal direction, each of said frame members (211) including
a front stake (212),
a rear stake (213) disposed behind said front stake (212), and
an inclined net support structure (214) disposed between said front stake (212) and said rear stake (213), and including a first spring component (2141) that is connected to said front stake (212), a bar component (2142) that has a front end connected to said first spring component (2141) and a rear end extending toward said rear stake (213), and a suspension unit (2143) disposed to connect said bar component (2142) to at least one of said front stake (212) and said rear stake (213) such that said bar component (2142) extends inclinedly between said front stake (212) and said rear stake (213) with said front end of said bar component (2142) disposed at a lower height than said rear end of said bar component (2142); and
a net component (220) including a net body (221) that is secured to said inclined net support structures (214) of said frame members (211) of said net supporting framework (210) and that is formed from intersecting string lines, and a plurality of leaf units (222) each having a base part (2221) that is connected to one of said string lines of said net body (221), and a fringed part (2222) that extends from said base part (2221) and that is capable of dissipating wave energy.

2. The shore protection system as claimed in claim 1, **characterized in that** said wave energy-dissipating member (200) further includes a plurality of resilient tire members (230) arranged in rows on said net body (221).

3. The shore protection system as claimed in claim 2, **characterized in that** at least one of said resilient tire members (230) in a lowermost one of said rows on said net body (221) includes
a resilient tire body (231) having a front side opposite to said net body (221), and an outer circumferential face, and
at least one flexible leaf unit (232, 233) having a base part (2321, 2331) that is disposed on one of said front side and said outer circumferential face of said resilient tire body (231), and a fringed part (2322, 2332) that extends from said base part (2321, 2331) of said flexible leaf unit (232, 233).

4. The shore protection system as claimed in any one of claims 1 to 3, further comprising:
a netlike fence (240) that extends along the longitudinal direction at an underside of said wave energy-dissipating member (200) and that has a top end connected to said front ends of said bar components (2142) of said inclined net support structures (214) of said frame members (211) of said net supporting framework (210); and
an underground cage component (250) that is disposed at an underside of said netlike fence (240) and that includes a cage body (251), and a connecting cable (252) connecting said cage body (251) to said netlike fence (240).

5. The shore protection system as claimed in any one of claims 1 to 4, further comprising an underground cage member (400) that includes a cage body (410) disposed forwardly of said wave energy-dissipating member (200), and a cable (420) connecting said cage body (410) to one of said front stakes (212) of said frame members (211) of said net supporting framework (210).

6. The shore protection system as claimed in any one of claims 1 to 5, further comprising a pair of end members (100) disposed at opposite longitudinal ends of said wave energy-dissipating member (200), each of said end members (100) including
a base unit (110),
a plurality of shock absorbing components (120, 130) disposed to extend upwardly from said base unit (110), each of said shock absorbing components (120, 130) including a post (121, 131) connected to said base unit (110), a plurality of resilient tires (122, 132) sleeved on said post (121, 131), and a netlike covering (133, 133) wrapped around said resilient tires (122, 132) on said post (121, 131),
a netlike enclosure (160) surrounding said shock absorbing components (120, 130),
a filler unit (170) for filling spaces among said shock absorbing components (120, 130) in said netlike enclosure (160), and
at least one prop (140, 150) disposed in said netlike enclosure (160) and connected to two of said shock absorbing components (120, 130),
wherein said net body (221) has opposite ends, each of which is connected to said prop (140, 150) of an adjacent one of said end members (100).

7. The shore protection system as claimed in claim 6, **characterized in that** said shock absorbing components (120, 130) of each of said end members (100) include two rear shock absorbing components (130) and one front shock absorbing component (120) that are arranged in a triangular formation, said front shock absorbing component (120) inclining rearwardly toward said rear shock absorbing components (130) of the respective one of said end members (100).

8. The shore protection system as claimed in claim 7, **characterized in that** each of said end members (100) includes two of said props (140, 150), each of which has a front end portion secured to said front shock absorbing component (120) and a rear end portion secured to a respective one of said rear shock absorbing components (130) in such a manner that said front end portion thereof is disposed at a lower height than said rear end portion thereof.

9. The shore protection system as claimed in any one of claims 6 to 8, **characterized in that** said net component (220) further includes a plurality of second spring components (223) that connect said opposite ends of said net body (221) to saidprops (140, 150) of said end members (100).

10. The shore protection system as claimed in any one of claims 6 to 9, **characterized in that** each of said endmembers (100) further includes a covering unit (180), said covering unit (180) including a plurality of energy-dissipating tires (181) that cover an outer side of said netlike enclosure (160).

11. The shore protection system as claimed in claim 10, **characterized in that** said energy-dissipating tires (181) are tied to said netlike enclosure (160), and adjacent ones of said energy-dissipating tires (181) are tied together.

12. The shore protection system as claimed in any one of claims 7 to 11, **characterized in that** said wave energy-dissipating member (200) further includes a cable member (260) connecting top ends of said front stakes (212) of said frame members (211) of said net supporting framework (210) to top ends of said posts (121) of said front shock absorbing components (120) of said end members (100).

13. The shore protection system as claimed in any one of claims 6 to 12, further comprising a pair of underground cage members (300), each of which includes a cage body (310) disposed forwardly of a respective one of said end members (100), and a cable (320) connecting said cage body (310) to the respective one of said end members (100).

14. The shore protection system as claimed in any one of claims 6 to 13, **characterized in that** said base unit (110) of each of said end members (100) includes a sinking-prevention screen (111), a rock cage component (112) disposed on said sinking-prevention screen (111), and a positioning frame (113) disposed between said sinking-prevention screen (111) and said rock cage component (112),
wherein, for each of said end members (100), said post (121, 131) of each of said shock absorbing components (120, 130) extends through said rock cage component (112) to connect to said positioning frame (113) of said base unit (110).

15. The shore protection system as claimed in claim 14, **characterized in that** said rock cage component (112) includes:
a metal cage (1121),
a plurality of positioning tires (1123) disposed inside said metal cage (1121) and disposed to permit said posts (121, 131) of said shock absorbing components (120, 130) of the respective one of said end members (100) to extend therethrough, and
a plurality of rocks (1122) for filling spaces among said positioning tires (1123) inside said metal cage (1121).
